# EUROPEAN PATENT APPLICATION

(11) **EP 0 956 978 A2**
(43) Date of publication of application: **17.11.1999**
(21) Application number: 99201427.4
(22) Date of filing: 06.05.1999
(51) Int. Cl.: B60B 21/06

(54) **Rim for vehicle wheels, with seats open towards sides for seating associated spokes**

(30) Priority: 15.05.1998 IT MI981068
(71) Applicant: BBS Riva S.p.A., 44030 Ruina di Ro Ferrarese (Ferrara) (IT)
(72) Inventor: Montalto, Alessandro, Verbania (IT)
(74) Representative: Raimondi, Alfredo, Dott. Ing. Prof.

(57) **Abstract**

Rim for wheels of motorcycles and the like, comprising an annular body (10) with circumferential lateral edges (11), in which the internal surface of the rim has seats (12) open towards the sides of the rim itself.

## Description

The present invention relates to a rim for wheels of motorcycles and the like, comprising an annular body with circumferential lateral edges for retaining the tyre, in which the surface of the rim directed towards the hub of the wheel has seats open towards the sides of the rim itself for seating spokes and the like.

It is known in the art that motorcycle wheels comprise two main components: the hub and the rim, also referred to as the "well".

The hub contains the seats for two radial ball bearings which support the wheel on the axle, while the rim seats the tyre and, in the case of tyres of the type without inner tubes, usually referred to as "tubeless", helps ensure a seal for the inflation pressure.

The two abovementioned components are mechanically connected by the spokes or those thin cylindrical elements which, arranged in two series which are usually eighteen or twenty in number, transmit the loads from the ground to the axle.

In view of the slender nature of the spokes, it must be assumed that spokes which are efficient (i.e. those which transmit the loads from the ground) are exclusively those which work by means of traction, and therefore, to ensure that the compressed spokes do not become slack owing to the effect of the external loads, adversely affecting centring of the hub/rim, all the spokes are pre-tensioned during assembly with high forces which arise from the torque applied during tightening of the fixing nipples present on the threaded end of the spoke on the hub side. This pretensioning force is such that the tractional load of the spoke is always certainly greater than any compressive load which may arise during operation.

In the case of tyres with an inner tube, the most common configuration envisages straight spokes, the ends of which engage in corresponding holes formed, with suitable inclinations, in the central zone of the well.

In the case where tubeless tyres are used, the problem which is posed is that of how to secure the spokes to the rim in a suitable manner, the solution described above no longer being able to be applied on account of the air tightness which is required of the rim itself and which is not possible because of the holes formed in it for receiving the spokes.

Normally, but only in the case of lightweight and low-powered motorcycles, the spokes are bent a short distance from their end and "hung" from a flange formed on the rim in the middle of the cross-section of the wheel. Bending of the end part of the spoke allows the spoke to be inserted laterally into its hole on the flange and then to be rotated so as to bring it into its final position for securing to the hub by means of the associated threaded nipple. This type of connection, however, results in a not insignificant misalignment of the force on the spoke, introducing flexural stresses into the spoke itself which, in the case of heavy and high-powered motorcycles, may reach values such as to adversely affect the structural reliability of the wheel.

EP 0 143 394 also discloses the possibility of providing spoke seating holes which are formed on the flange for laterally retaining the tyre. This solution, although allowing the use of straight spokes, nevertheless requires said spokes to be inserted into the respective holes in the rim in a direction parallel to their longitudinal axis and therefore, although being functional, said known solution nevertheless has drawbacks arising from the fact, in order to achieve the desired functionality, the holes for seating the spokes must be precision-machined, resulting in the need for re-machining of the part - which is obtained by means of casting or pressing - and formation of the said holes, with a consequent considerable increase in the costs on account of the large number of holes to be provided.

The flange in which the said holes are to be formed must therefore be made with an abundance of material so as to allow the formation of holes therein, resulting in a further constraint and in an undesirable increase in the weight of the rim.

In addition, the end of the spoke is located in a zone onto which the forces due to the internal pressure of the tyre are transmitted, said forces being transmitted laterally and subjecting the spoke to variations in tension and to an undesirable bending moment.

The technical problem which is posed, therefore, is that of providing a rim for tubeless tyres in particular for a motorcycle, which allows the use of straight spokes and has characteristics of strength and rigidity in the spoke/rim joining zone, which result in stable tensioning of said spokes and therefore centring of the hub/rim after assembly of the wheel.

Within the scope of this problem a further requirement is that the rim should have a certain aesthetic finish (an aspect of some importance in the motorcycle sector), while retaining a low cost for the purposes of mass-production.

These technical problems are solved according to the present invention by a rim for wheels of motorcycles and the like, comprising an annular body with circumferential lateral edges for retaining the tyre, in which the surface of the rim directed towards the hub of the wheel has seats which are open towards the sides of the rim itself, for seating spokes and the like.

Further details may be obtained from the following description of a non-limiting example of embodiment of the invention provided with reference to the accompanying drawings, in which:
Figure 1 shows a perspective view of a rim according to the invention complete with hub;
Figure 2 shows a partial cross-section along the plane indicated by II-II in Fig. 1;
Figure 3 is a cross-section showing a detail of the spoke/rim connection; and
Figure 4 is a cross-section showing the means for fixing a lateral rim finishing profile to the rim.

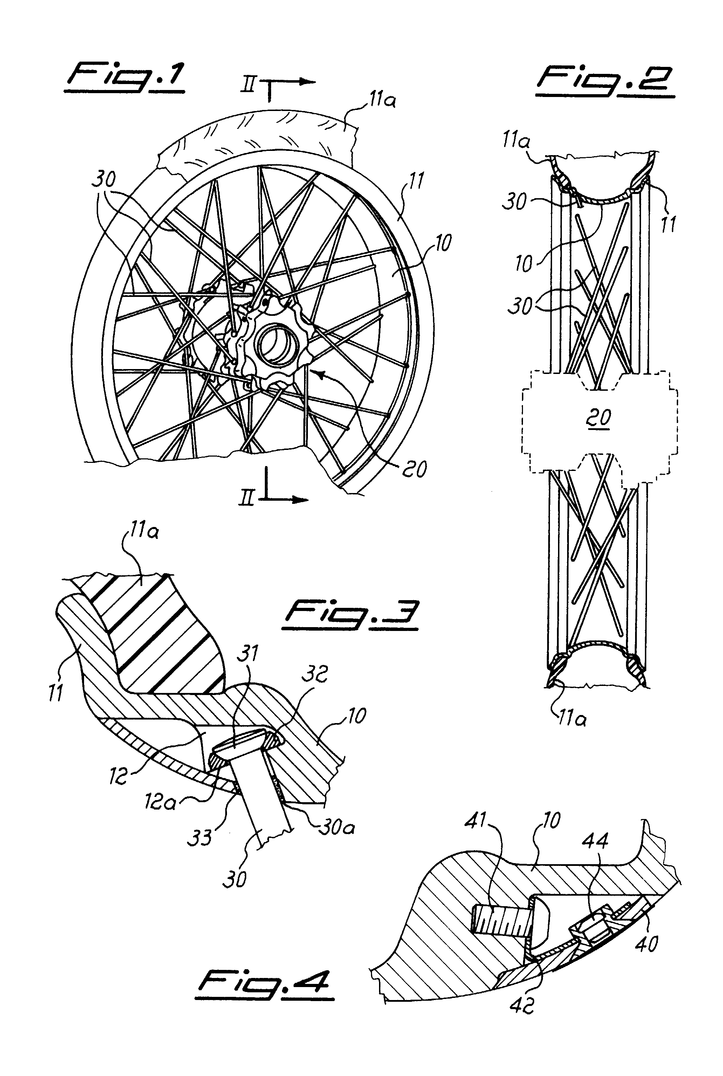

As shown in Fig. 1, a spoked wheel comprises a rim 10 and a hub 20 which are connected together by means of spokes 30.

The rim 10 is delimited by two lateral edges 11 which form the shoulders for retaining the tyre 11a.

According to the invention it is envisaged that recesses 12 which are arranged at a suitable relative angular distance are formed in the internal surface of the rim 10; said recesses have an opening which is directed towards the side of the rim and therefore allow the lateral insertion of the spokes 30.

Each recess 12 has a bearing surface 12a formed at given inclinations in relation to the corresponding holes in the hub so as to allow bearing contact of the end 31 of the associated spoke 30 which is thus positioned automatically oriented at a predefined working angle.

In a preferred embodiment of the rim according to the invention, a washer 32 with a spherical seat for the corresponding engagement with the spherical end 31 of the spoke is arranged between the end 31 of the spoke 30 and the bearing surface 12a of the recess 12.

In this way it is possible to achieve operation of the end of the spoke which is similar to that of a connecting rod, i.e. working under purely axial load, while at the same time avoiding the need for complex precision-machining of the bearing surface 12a.

As can be seen from Fig. 3, a shaped ring 33 of polymeric material or the like is provided, said ring being arranged in a corresponding seat of the recess 12 and being provided with a hole 30a through which the spoke 30 passes; said shaped ring ensures a seal with respect to the interior, preventing the entry of water and/or dust into the seat 12.

Fig. 4 shows a detail of the means for fixing, to the rim, a ring 40 providing a finish for the side of the rim 10; said ring has the dual purpose of protecting the various seats 12 and corresponding ends 31 of the spoke 30, as well as providing an aesthetic finish for the side of the rim, and may for example be fixed by means of gluing or a plurality of mechanical securing points arranged at 120° along the side circumference of the rim. More particularly, said securing means comprise a screw 41 for fastening to the well 10 a small steel angle-bracket 42 to which, by means of a pull rivet 44, the said ring 40 is fixed.

By way of alternative, it is possible to provide a floating nut fixed to the angle-bracket 42 and an associated screw, thus providing a connecting system which can be easily disassembled.

It is therefore obvious how the rim according to the invention ensures a high degree of rigidity of the spoke/well joining zone owing to the fact that said zone is located fairly far from the well flange which, as is known, is subject to substantial deflections due to the tyre inflation pressure.

In addition to this, the strength and the rigidity of the wheel assembly are increased, reducing at the same time the weight of the rim which is kept to a minimum owing to the complete machining of the profile, which makes it possible to achieve tolerances which are much more precise than those applicable to a rough-cast piece and, with average diameters of 450 mm and more, even a few tenths difference in thickness result in considerable differences in weight.

Owing to the machining operations which are limited to machining of the profile alone it is also possible to reduce considerably the production costs.

## Claims

1. Rim for motorcycle wheels and the like, comprising an annular body (10) with circumferential lateral edges (11) for retaining the tyre, characterized in that the surface of the rim directed towards the hub (20) of the wheel has seats (12) open towards the sides of the rim itself.

2. Rim according to Claim 1, characterized in that a bearing surface for the end (31) of spokes (30) connecting the rim to the associated hub (20) is provided inside said seats (12).

3. Rim according to Claim 2, characterized in that said bearing surface (12a) is inclined in the two planes so as to be perpendicular to the axis of the corresponding hole in the hub.

4. Rim according to Claim 2, characterized in that a washer is arranged between said bearing surface (12a) and said end (31) of the spoke (30).

5. Rim according to Claim 4, characterized in that said washer has a spherical bearing seat.

6. Rim according to Claim 1, characterized in that a ring (40) for closing said seats (12) is fixed to the lateral flank thereof.

7. Rim according to Claim 6, characterized in that said ring (40) is fixed by means of mechanical connecting means.

8. Rim according to Claim 1, characterized in that said ring (40) is fixed by means of gluing or the like.

9. Rim according to Claim 1, characterized in that a coaxial shaped sealing ring (33) is arranged between the spoke (30) and the associated seat (12).
